# EUROPEAN PATENT APPLICATION

(11) **EP 0 605 926 A1**
(43) Date of publication of application: **13.07.1994**
(21) Application number: 93203687.4
(22) Date of filing: 24.12.1993
(51) Int. Cl.: G01C 21/20

(54) **Vehicle navigation device**

(30) Priority: 04.01.1993 EP 93200006
(71) Applicant: Philips Electronics N.V., 5621 BA Eindhoven (NL)
(72) Inventor: Rouws, Petrus Levanius Antonius, c/o Int., NL-5656 AA Eindhoven (NL)
(74) Representative: Strijland, Wilfred

(57) **Abstract**

A navigation device offering accurate determination of the vehicle location is obtained by detection of a change of the strength of a radio signal received and by relating the detected change to a specific location in a cartographic representation of the surroundings area.

## Description

The invention relates to a navigation device for a vehicle, which device comprises a storage medium in which a cartographic representation of the surrounding area is stored, and means for receiving sensor data directly derived frommotion and orientation of the vehicle, and on the basis thereof assigning an actual position to the vehicle relative to said cartographic representation.

The invention also relates to a vehicle comprising such a device.

A device of the kind set forth is described in the article "CARIN, a car information and navigation system", Philips Technical Review, Volume 43, No. 11/12, December 1987. The known device periodically determines so-called dead reckoning coordinates by means of wheel sensors and an electronic compass. Patterns of successively calculated coordinates are compared, by means of a computer, with digitized map data stored on a Compact Disc. On the basis thereof the computer assigns an actual position relative to the map data to the vehicle. The computer needs to know the actual position for planning a route for the vehicle. The locally present data may in whole or in part be derived from data that is made globally available, such as by satellite, of which the navagation system only loads the part that is presently relevant.

The known device has several drawbacks. Wheel sensors are comparatively inaccurate, so that the calculated dead reckoning coordinates are also comparatively inaccurate. A known remedy is to redress drift errors through comparing with prominent cartogrpahic features, such as road bends or crossing points where the vehicle takes a side road. Now, in urban traffic a vehicle will often change direction, enabling the computer to recognize where the vehicle is located relative to the map. On main roads, (for example, highways), however, it often occurs that a vehicle hardly changes direction over a comparatively long period of time. As a result, road pattern recognition by the computer is much more difficult. Wheel sensors having an inaccuracy of, for example 1%, may then cause a substantial deviation between the actual position assigned by the computer and the actual position relative to the map. Consequently, the computer could provide the driver with an incorrect navigation directive.

It is *inter alia* an object of the invention to provide a more accurate navigation device for a vehicle. To this end, a device in accordance with the invention is characterized in that it also comprises means for receiving a broadcast signal and means for detecting a predetermined instantaneous change of the strength of the broadcast signal received, and means for relating a detected change to a specific location in the cartographic representation in order to correct the assigned actual position to match said specific location. The broadcast signal may be a radio signal that is actually being received by the car's radio. Alternatively, it may just be a carrier signal at an appropriate frequency. Detection of the instantaneous change constitutes an indication that the vehicle is at or near a location where the reception of radio signals changes abruptly, for example upon entering or leaving a tunnel, driving underneath a fly-over, or reaching the crest of a mountain ridge. Locations of this kind are included and can be recognized in the cartographic representation of the surrounding area. Consequently, on the basis of such detection the actual position of the vehicle can be corrected. Because vehicles often already comprise a radio receiver, the invention can be realised in an inexpensive manner.

An embodiment of the device in accordance with the invention is characterized in that the means for detecting the change are suitable to detect a decrease of the strength of the radio signal received below a threshold value for at least a threshold time interval. Because a vehicle often drives underneath a bridge or fly-over, the radio signal often disappears so that the vehicle location can be repeatedly corrected. This correction offers a substantially more accurate location, notably when the vehicle is a car driving on a highway. The decrease whenpassing underneath a fly-over, or increase when reflection against a particular structure adds to the standard signal, will generally be a relative one, for example, at least a factor of 2. The threshold time is chosen appropriately. For example, the time for passing underneath a fly-over is in the order of 1 second, so the threshold time may be ¼ of a second: this would filter out instantaneous effects of lighting, etc. The matching to a specific location is only effected when such appears reasonable, given the expected deviation of the dead-reckoning coordinates. Outside an "expected" region no matching is undertaken.

In a further embodiment of the device in accordance with the invention, the means for receiving a radio signal generate a level signal, the means for detecting the change comprising a comparison circuit for comparing the level signal with the threshold value. This constitutes a simple and reliable implementation, because the level signal forms a suitable indication as regards the intensity of the radio stations received per band. Moreover, in this manner it is not necessary to evaluate directly the aerial signal itself; this would otherwise lead to undesired attenuation of the signal.

A further embodiment of the device in accordance with the invention is characterized in that the threshold time interval and the threshold value are dependent on an actual frequency band of the radio signal received. The degree of attenuation of the received radio signals upon passage of a bridge, tunnel or fly-over is dependent on the frequency band used at that instant. By making the threshold time interval and the threshold value dependent on the frequency band, undue corrections (for example, due to the passage of a building or a tree) are prevented.

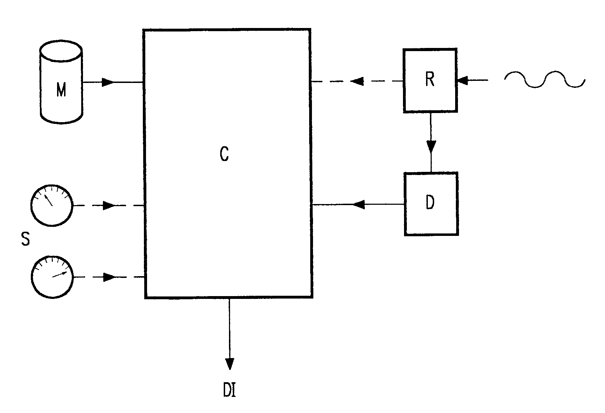

The invention will be described in detail hereinafter, by way of example, with reference to Fig. 1 which shows a device in accordance with the invention.

Fig. 1 shows a device in accordance with the invention. A storage medium M contains digitized map data representing the surrounding area of the vehicle. M is, for example a CD-ROM having a storage capacity of, for example 5 Gbits. The map data concerns roads, junctions, fly-overs, tunnels, traffic rules (for example, speed limits, one-way signs, right of ways), categories of roads, road gradients, and possibly further information concerning hotels, parks *etc*. A computer C is suitable to receive measurement data from sensors S, for example wheel sensors, and a compass. The computer is also suitable to select relevant sub-information from the storage medium M and for assigning to the vehicle an actual position relative to the map data, based on the measurement data received. This can be realised by forming patterns of dead reckoning coordinates from the measurement data and by comparing these patterns with route segments from the map data as described in European Patent Application EP 0 471 405 A1. The actual position assigned can be applied, if desired, to a display DI for the display of the actual position in the relevant map section, for example by means of a CRT or an LCD display. The actual position assigned can also be further processed by the computer in order to determine an optimum route to a given final destination.

The pattern recognition by the computer for assignment of the actual position offers favourable results in the case of urban traffic: the heading changes comparatively often, thus producing a pattern of turns made wherefrom the actual position of the vehicle can be derived with a high degree of reliability. Each such turn, or a sequence of a few such turns may allow for correcting the dead-reckoning coordinates. However, in the case of long, straight or nearly straight road segments pattern recognition is much more difficult: in many cases the vehicle does not or hardly changes direction for a comparatively long period of time. In that case the computer can very reliably recognize the road being followed, but for determining the exact position on the relevant road the computer is dependent on the measurement data supplied. When wheel sensors are used, the measurement data may deviate as much as 1% from the actual distance travelled. Thus, after travelling on the highway for 20 km, the actual position assigned may already deviate by as much as 200 m from the real position. This may cause the computer to generate incorrect navigation directives, for example by selecting an incorrect exit or by instructing too late that the road is to be left.

In order to prevent this, the device comprises a radio receiver R (which could also apply, if desired, RDS information to the computer C) and detection means D for detecting a predetermined change of the strength of the radio signal received. When the strength suddenly increases, the vehicle is located, for example at the exit of a tunnel or at the crest of a mountain ridge. When the strength suddenly decreases, the vehicle is located, for example at the entrance of a tunnel or underneath a fly-over. Locations of this kind can be traced in the cartographic representation of the surrounding area as stored in the memory M. The computer can simply correct the assigned actual position by relating the detected change of strength to a specific location in the cartographic representation. For example, on a highway the computer assigns, upon disappearance of the radio signal received, the position corresponding to the beginning of the nearest tunnel or fly-over as the actual position to the vehicle. A simple and inexpensive reset mechanism is thus realised.

In order to prevent undue corrections by the computer when the vehicle passes a building or a tree, of course, calibration is required. In dependence on the frequency band of the radio signal used, a threshold value and a threshold time interval are determined, the detection means D being suitable to detect a decrease of the strength of the radio signal received below a threshold value for at least a threshold time interval. The degree of attenuation of radio signals received (intensity and duration) upon passage of a bridge, tunnel or fly-over is dependent on the instantaneous frequency band and will generally be calibrated in a test run with a prototype or test vehicle. A specific location can usually be recognized first by the disappearance of the radio signal received. The radio signal received increases again slightly later. This is because a vehicle often passes underneath a bridge or fly-over, so that correction of the location can be repeatedly performed. Notably when the vehicle is a car travelling on a highway such correction produces a substantially more accurate location as described above.

A radio receiver generally generates a level signal which can be used by the detection means D. These means may include a comparison circuit for comparing the level signal with the threshold value. The level signal constitutes a suitable indication in respect of the intensity of the radio stations received per band. The aerial signal itself need not be directly evaluated in that case. This offers the advantage that undesirable attenuation of the aerial signal is avoided.

## Claims

1. A navigation device for a vehicle, which device comprises a storage medium in which a cartographic representation of the surrounding area is stored, and means for receiving sensor data directly derived frommotion and orientation of the vehicle, and on the basis thereof assigning an actual position to the vehicle relative to said cartographic representation, characterized in that the device also comprises means for receiving a broadcast signal and means for detecting a predetermined instantaneous change of the strength of the broadcast signal received, and means for relating a detected change to a specific location in the cartographic representation in order to correct the assigned actual position to match said specific location.

2. A device as claimed in Claim 1, characterized in that the means for detecting the change are arranged to detect a decrease of the strength of the broadcast signal received below a threshold value for at least a threshold time interval.

3. A device as claimed in Claim 2, characterized in that the means for receiving the broadcast signal are arranged to generate a level signal, the means for detecting the change comprising a comparison circuit for comparing the level signal with the threshold value.

4. A device as claimed in any one of the Claims 2 to 3, characterized in that the threshold time interval and the threshold value are dependent on an actual frequency band of the broadcast signal received.

5. A vehicle comprising a device as claimed in any one of the Claims 1 to 4.
